# EUROPÄISCHE PATENTSCHRIFT

(11) **EP 0 683 635 B1**
(45) Veröffentlichungstag und Bekanntmachung des Hinweises auf die Patenterteilung: **28.05.1997**
(21) Anmeldenummer: 94907551.9
(22) Anmeldetag: 11.02.1994
(51) Int. Cl.: A47J 47/16

(54) **HALTERUNG MIT GEWÜRZBEHÄLTERN**
HOLDER WITH SPICE CONTAINERS
SUPPORT AVEC POTS D'EPICES

(30) Priorität: 12.02.1993 DE 9302028 U
(43) Veröffentlichungstag der Anmeldung: 29.11.1995
(73) Patentinhaber: EMSA-Werke Wulf GmbH & Co., 48282 Emsdetten (DE)
(72) Erfinder: WULF, Christian, D-48282 Emsdetten (DE)
(74) Vertreter: Grünecker, Kinkeldey, Stockmair & Schwanhäusser Anwaltssozietät
(86) Internationale Anmeldenummer: EP9400398
(87) Internationale Veröffentlichungsnummer: WO9417710

(56) Entgegenhaltungen:
- CH-A- 597 821
- DE-C- 399 927
- DE-C- 561 370
- DE-U- 8 909 813
- FR-A- 534 236
- US-A- 2 672 741
- US-A- 4 700 850
- US-A- 4 884 701

## Beschreibung

Die Erfindung betriff eine Halterung mit Gewürzbehältern, mit einem rotationssymmetrischen Ständer, der einen Ständerfuß und seinem oberen Ende ein Drehlager für einen einen Halteabsatz aufweisenden Rotor umfaßt, wobei die Gewürzbehälter an dem Halteabsatz hängen, und wobei der Ständer einen Lagerkörper aufweist, an dessen Spitze das Drehlager vorgesehen ist.

Aus der CH-A-59 78 21 ist ein Haltegestell für Küchengeräte dieser Gattung bekannt, bei dem ein Tragring als Halteabsatz zum Anhängen von Kellen dient. Der Tragring ist über einen in den Ständer eingeführten Steckzapfen drehbar gelagert. Nachteiligerweise ist diese Lagerung für größere Belastungen ungeeignet. Bei einseitigem Belasten des Tragrings kann der Steckzapfen im Ständer verkanten, so daß der Tragring sehr schwer zu drehen ist. Wenn der Tragring einer einseitig an ihm angreifende Kraft nicht mehr durch Drehung nachgeben kann, so kann leicht das gesamte Gestell umgeworfen werden.

Der Erfindung liegt die Aufgabe zugrunde, eine einfach aufgebaute und kostengünstige Halterung der eingangs genannten Gattung zu schaffen, die bedienfreundlich ist und eine verbesserte Lagerung aufweist.

Diese Aufgabe wird erfindungsgemäß dadurch gelöst, daß die Wand des Lagerkörpers eine Führung des Rotors bildet.

Damit hat der Rotor einen verminderten Drehwiderstand, und der Rotor läßt sich auch wenn er ungleichmäßig mit Gewürzbehältern belastet ist leicht drehen. Die Führungskräfte des Rotors werden an dem Lagerkörper abgestützt. Der Rotor erhält dadurch in Kombination mit dem Drehlager eine sehr gute Stabilität. Bei der Führung des Rotors an dem Lagerkörper kann das Spiel der Führung minimiert werden bzw. auf den Wert eingestellt werden, der zum einen eine exakte Führung und zum anderen eine leichte Verdrehbarkeit des Rotors gewährleistet.

Vorzugsweise ist das Drehlager als konzentrisch zur Achse des Ständers angeordneter Stift ausgebildet. Ein Stift an der Spitze des Ständers eignet sich besonders gut als Drehlager. Ordnet man z.B. als Gegenlager an der Unterseite eines als Drehteller ausgebildeten Rotors eine Lageraufnahme an, so ergibt sich hierdurch eine einfache und dennoch zuverlässige Lagerung des Rotors.

Der Rotor kann eine den Körper des Ständers wenigstens teilweise umgebende Hüllwand aufweisen. Auf diese Weise erzielt man eine besonders gut geführte Verdrehbarkeit des Rotors gegenüber dem Ständer. Das Spiel kann minimiert werden.

Günstigerweise kann die Hüllwand des Rotors von der Körperwand des Lagerkörpers geführt sein.

Als Variante der Erfindung ist der Lagerkörper ein Zylinder, der sich an seinem oberen Ende konisch verjüngt. Diese Form eignet sich besonders, um an der Spitze des Lagerkörpers ein Drehlager vorzusehen. Der Rotor kann dadurch beim Zusammenbau leicht an dem Lagerkörper angebracht werden und wird beispielsweise beim Aufstecken durch die konische Form automatisch zentriert.

Um die Herstellung des Ständers und des Rotors zum Beispiel aus Kunststoff oder auch aus Metall zu vereinfachen, ist es günstig, wenn der Ständer und/oder der Rotor rotationsymmetrische Körper sind. Die Rotationsachsen können dabei konzentrisch sein.

Der Ständer kann gegebenenfalls einstückig einen Standfuß und einen Lagerkörper aufweisen, an dessen oberen Ende das Drehlager für den Rotor angeordnet ist. Ein solcher Körper läßt sich preisgünstig aus Kunststoff herstellen. Der Standfuß sorgt für Stabilität, der Lagerkörper mit dem Drehlager an dem oberen Ende bedingt eine ausreichende Höhe für den Rotor, um die hängende Anordnung der Gewürzbehälter zu ermöglichen.

Als Abziehsicherung kann am unteren Ende eine horizontale Kreisscheibe konzentrisch zur Zylinderachse angeordnet sein, die im Hinblick auf eine gewünschte Flexibilität Radialschnitte aufweisen kann. Die Kreisscheibe kann kombiniert werden mit einem am Rotor angeordneten Haken, der die Drehbeweglichkeit des Rotors gegenüber dem Ständer ermöglicht, aber das vertikale Abziehen des Rotors vom Ständer in Richtung der Rotationsachse verhindern soll. Der Haken untergreift die Kreisscheibe und sichert so den Rotor gegen das unerwünschte Abziehen.

Durch die Gestaltung der Flexibilität der Kreisscheibe kann die Abziehsicherung entweder lösbar oder auch unlösbar gemacht werden.

Der Haken kann vorteilhafterweise Teil einer Handhabe sein, die im Rotor gelagert ist.

Im Hinblick auf die Stabilität der Halterung ist es günstig, wenn der Durchmesser des Ständerfußes mindestens in der Summe des Durchmessers des Zylinders, sowie des zweifachen Durchmessers der in der Halterung aufgehängten Gewürzbehälter entspricht. Der Ständerfuß erstreckt sich dann mindestens so weit nach außen, wie die am Halteabsatz abgehängten Gewürzbehälter.

Der Rotor ist vorteilhafterweise als Drehteller ausgebildet, an dessen Rand der Halteansatz angeformt sein kann. Die Gewürzbehälter verfügen über einen Aufhängehaken, der den Halteabsatz übergreift.

Der Drehteller ist in Hinblick auf diesen Haltehaken der Gewürzbehälter vorteilhafterweise als Kegel ausgebildet, dessen Spitze nach unten ragt und an der Unterseite die Lageraufnahme hat. In diesem Fall kann der Haltehaken der Gewürzbehälter in etwa parallel zur Kegelfläche des Drehtellers verlaufen. Verdreht man den Rotor, so kann sich das freie Ende des Hakens der Gewürzbehälter auf der Kegelfläche abstützen. Es ergibt sich hierdurch eine gewisse Sicherung gegen die Fliehkraft beim schnellen Verdrehen.

Wie bereits eingangs erwähnt, gilt die horizontale Kreisscheibe als Abziehsicherung des Rotors gegenüber dem Ständer. Der Verriegelungshaken kann das freie Ende einer Handhabe sein, die im Rotor verankert ist und durch eine Verankerungsbohrung in den Bereich der Kreisscheibe hineinreicht.

Ein Ausführungsbeispiel der Erfindung wird nachfolgend anhand einer Zeichnung beschrieben.

Es zeigt:

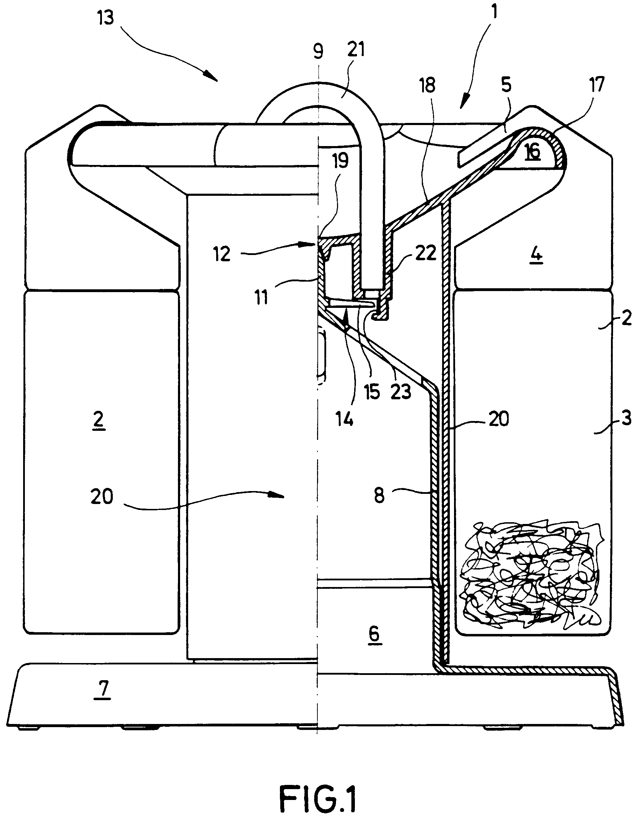

- Fig.1: eine kombinierte Seitenansicht und vertikalen Seitenschnitt der Halterung, und

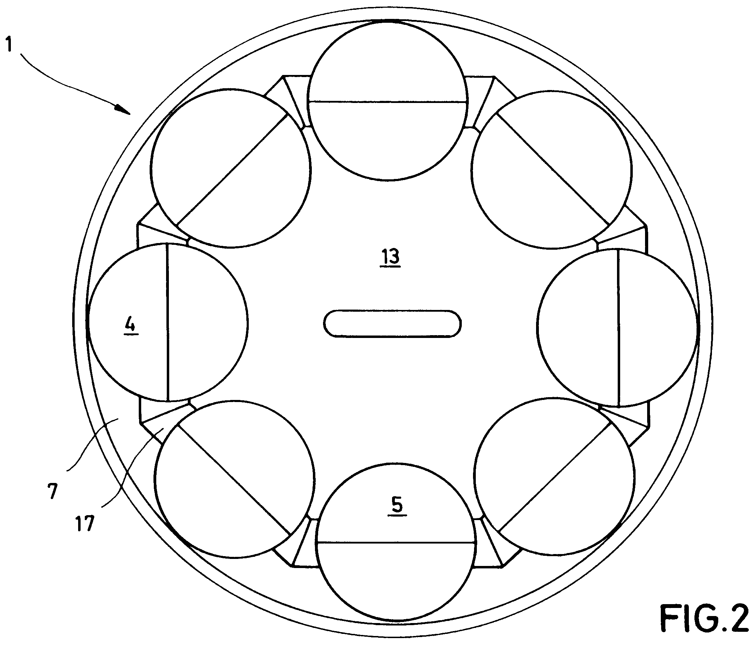

- Fig.2: eine Draufsicht auf die Halterung von Figur 1.

Die Zeichnung zeigt eine Halterung 1 für Gewürzbehälter 2.

Im vorliegenden Fall bestehen die Gewürzbehälter aus einem durchsichtigen Zylinderglas 3, das an seinem oberen Ende über ein Schraubgewinde mit einem Deckel 4 abgeschlossen ist, der über einen einstückig angeformten Haken 5 eine Aufhängemöglichkeit verschafft. Der Haken umschließt einen nach unten offenen Schlitz, der das Einführen des Hakens von oben nach unten auf einen Halteabsatz 17 ermöglicht und ein sicheres Einhängen an denselben gewährleistet. Die Tiefe des Schlitzes und dessen Endpunkt ist so bestimmt, daß der Aufhängepunkt über dem Schwerpunkt des Zylinderglases sich befindet.

Die Halterung verfügt über einen Ständer 6, der einstückig aus einem Ständerfuß 7 und einem Lagerkörper 8 besteht. Beide Teile sind rotationssymmetrisch und verfügen über eine koaxiale, vertikale Rotationssymmetrieachse 9. Das obere Ende des zylindrischen Lagerkörpers verjüngt sich konisch nach oben hin und besitzt an der Spitze 10 einen Stift 11, der als Drehlager 12, für einen Rotor 13 dient.

Am unteren Stiftende ist eine horizontale Kreisscheibe 14 konzentrisch zur Zylinderachse angeordnet, sie dient als Abziehsicherung für den Rotor gegenüber dem Ständer. Die Kreisscheibe ist durch Radialschnitte 15 in Segmente aufgeteilt, um sie für das später noch zu erläuternde einschnappende Verriegeln elastisch zu machen.

Der Rotor 13 ist als Drehteller ausgebildet und im vorliegenden Fall als Achteck ausgestaltet. Der Rotor ist punktsymmetrisch zur Rotationsachse 9 gestaltet. Der Rand 16 des Drehtellers bildet einen Halteabsatz 17 in Form eines im Querschnitt halbkreisförmigen Randwulstes. Der Rand ist nach unten offen und bildet den äußeren Abschluß eines mit der Spitze nach unten weisenden Kegels 18. An der Unterseite der Spitze des Kegels befindet sich eine Lageraufnahme 19 in Form einer Spitzmulde, die auf die geometrische Form der Spitze des Stiftes 11 abgestellt ist.

Einstückig mit dem Drehteller ist eine Hüllwand 20 verbunden, die von der Unterseite des Drehtellers nach unten ragt und den Lagerkörper 8 wenigstens teilweise umgibt. Die Wand des Lagerkörpers kann als Führung für die Hüllwand und damit für den Rotor dienen. Um die Führung zu optimieren, kann der Spalt zwischen Hüllwand und Lagerkörper minimiert werden. Der Rotor 13 ist mit einer Handhabe 21 in Form eines U-Bügels versehen, der mit seinen beiden Enden in vertikalen Bohrungen 22 des Rotors verankert ist.

Die beiden freien Enden des im Querschnitt kreisförmigen Bügels sind als einseitig offene Haken 23 ausgebildet, die in montierter Stellung der Handhabe die Kreisscheibe 14 so umgreifen, daß die Rotationsbewegung des Rotors auf dem Drehlager nicht behindert, jedoch ein unerwünschtes Abziehen des Rotors in vertikaler Richtung vom Ständer verhindert ist.

## Patentansprüche

1. Halterung mit Gewürzbehältern, mit einem rotationsymmetrischen Ständer (6), der einen Ständerfuß (7) und an seinem oberen Ende ein Drehlager (12) für einen, einen Halteabsatz (17) aufweisenden Rotor (13) umfaßt, wobei die Gewürzbehälter (2) an dem Halteabsatz (17) hängen, und wobei der Ständer (6) einen Lagerkörper (8) aufweist, an dessen Spitze (10) das Drehlager (12) vorgesehen ist,
**dadurch gekennzeichnet,**
daß die Wand des Lagerkörpers (8) eine Führung des Rotors (13) bildet.

2. Halterung nach Anspruch 1,
**dadurch gekennzeichnet,**
daß das Drehlager (12) als konzentrisch zur Achse (9) des Ständers (6) angeordneter Stift ausgebildet ist.

3. Halterung nach einem der vorhergehenden Ansprüche,
**dadurch gekennzeichnet,**
daß der Rotor eine den Körper (8) des Ständers (6) wenigstens teilweise umgebende Hüllwand (20) aufweist.

4. Halterung nach einem der vorhergehenden Ansprüche,
**dadurch gekennzeichnet,**
daß die Hüllwand (20) des Rotors (13) von der Körperwand des Lagerkörpers (8) geführt ist.

5. Halterung nach einem der vorhergehenden Ansprüche,
**dadurch gekennzeichnet,**
daß der Lagerkörper (8) ein Zylinder ist, der sich an seinem oberen Ende konisch verjüngt.

6. Halterung nach einem der vorhergehenden Ansprüche,
**dadurch gekennzeichnet,**
daß an dem Ständer (6) eine horizontale Kreisscheibe (14) konzentrisch zur Zylinderachse (9) vorhanden ist.

7. Halterung nach einem der vorhergehenden Ansprüche,
**dadurch gekennzeichnet,**
daß die Kreisscheibe (14) durch Radialschnitte (15) in Segmente aufgeteilt ist.

8. Halterung nach Anspruch 6 oder 7,
**dadurch gekennzeichnet,**
daß die Kreisscheibe am unteren Stiftende vorgesehen ist.

9. Halterung nach einem der Ansprüche 6 bis 8,
**dadurch gekennzeichnet,**
daß die Kreisscheibe von einem mit dem Rotor (13) verbundenen hakenförmigen Ende wenigstens teilweise hintergriffen ist und eine Abziehsicherung des Rotors (13) von dem Ständer (6) bildet.

10. Halterung nach einem der vorhergehenden Ansprüche,
**dadurch gekennzeichnet,**
daß der Durchmesser des Ständerfußes (7) mindestens der Summe des Durchmessers des Lagerkörpers (8) sowie des zweifachen Durchmessers der in der Halterung aufgehängten Gewürzbehälter (2) entspricht.

11. Halterung nach einem der vorhergehenden Ansprüche,
**dadurch gekennzeichnet,**
daß der Rotor (13) als Drehteller ausgebildet ist, der an seiner Unterseite eine Lageraufnahme (19) für das Drehlager (12) besitzt.

12. Halterung nach einem der vorhergehenden Ansprüche,
**dadurch gekennzeichnet,**
daß der Drehteller in der Draufsicht als Kreis oder Vieleck, zum Beispiel Achteck gestaltet ist.

13. Halterung nach einem der vorhergehenden Ansprüche,
**dadurch gekennzeichnet,**
daß der Rand (16) des Drehtellers den Halteabsatz (17) bildet.

14. Halterung nach einem der vorhergehenden Ansprüche,
**dadurch gekennzeichnet,**
daß der Rotor (13) als Kegel (18) ausgebildet ist, an dessen Spitze die Lageraufnahme (19) ist.

15. Halterung nach einem der vorhergehenden Ansprüche,
**dadurch gekennzeichnet,**
daß der Kegel des montierten Rotors (13) mit seiner Spitze nach unten zeigt.

16. Halterung nach einem der vorhergehenden Ansprüche,
**dadurch gekennzeichnet,**
daß die Gewürzbehälter (2) jeweils mit einem Haken (5) am Halteabsatz (17) eingehängt sind.

17. Halterung nach einem der vorhergehenden Ansprüche,
**dadurch gekennzeichnet,**
daß der Rotor (13) mit einer Handhabe (21) versehen ist, die im Rotor verankert ist.

18. Halterung nach einem der vorhergehenden Ansprüche,
**dadurch gekennzeichnet,**
daß die Handhabe (21) als Profil, z.B. Rundstab, ausgebildet ist und über ein hakenförmiges Ende verfügt, das zusammen mit der Kreisscheibe (14) eine Abziehsicherung bildet.

19. Halterung nach einem der vorhergehenden Ansprüche,
**dadurch gekennzeichnet,**
daß die Handhabe in Seitenansicht U-förmig ist und vornehmlich mit ihren beiden Enden in vertikalen Bohrungen (22) des Rotors (13) verankert ist.

20. Halterung nach einem der vorhergehenden Ansprüche,
**dadurch gekennzeichnet,**
daß wenigstens ein Ende der Handhabe (21) als einseitig offener Haken (23) ausgebildet ist, der bei im Rotor montierter Handhabe mit seiner Öffnung zur Rotorachse hin zur Aufnahme der Kreisscheibe (14) offen ist, wobei der Haken mit seiner Hakennase die Kreisscheibe wenigstens teilweise untergreift.

21. Halterung nach Anspruch 1,
**dadurch gekennzeichnet,**
daß der Rotor (13) ein punktsymmetrischer oder rotationsymmetrischer Körper ist.

## Claims

1. Support with spice containers with a rotationally symmetrical stand (6) including a stand base (7) and at its upper end a pivot bearing (12) for a rotor (13) comprising a holding ledge (17), wherein the spice containers (2) hang from the holding ledge (17) and wherein the stand (6) comprises a bearing body (8) at the apex (10) of which is provided the pivot bearing (12), characterised in that the wall of the bearing body (8) forms a guide for the rotor (13).

2. Support according to claim 1, characterised in that the pivot bearing (12) is designed as a pin arranged concentrically to the axis (9) of the stand (6).

3. Support according to any of the preceding claims, characterised in that the rotor comprises an enveloping wall (20) at least partially surrounding the body (8) of the stand (6).

4. Support according to any of the preceding claims, characterised in that the enveloping wall (20) of the rotor (13) is guided by the body wall of the bearing body (8).

5. Support according to any of the preceding claims, characterised in that the bearing body (8) is a cylinder which tapers conically at its upper end.

6. Support according to any of the preceding claims, characterised in that on the stand (6) there is a horizontal circular disc (14) concentrically with the cylinder axis (9).

7. Support according to any of the preceding claims, characterised in that the circular disc (14) is divided by radial cuts (15) into segments.

8. Support according to claim 6 or 7, characterised in that the circular disc is provided at the lower end of the pin.

9. Support according to any of claims 6 to 8, characterised in that a hooked end connected to the rotor (13) at least partially engages behind the circular disc which forms means to prevent the rotor (13) from being pulled off the stand (6).

10. Support according to any of the preceding claims, characterised in that the diameter of the stand base (7) corresponds to at least the sum of the diameter of the bearing body (8) as well as of twice the diameter of the spice containers (2) suspended in the support.

11. Support according to any of the preceding claims, characterised in that the rotor (13) is designed as a turntable which on its lower side has a bearing receptacle (19) for the pivot bearing (12).

12. Support according to any of the preceding claims, characterised in that the turntable in plan view is designed as a circle or polygon, for example octagon.

13. Support according to any of the preceding claims, characterised in that the edge (16) of the turntable forms the holding ledge (17).

14. Support according to any of the preceding claims, characterised in that the rotor (13) is designed as a cone (18) at the apex of which is the bearing receptacle (19).

15. Support according to any of the preceding claims, characterised in that the cone of the assembled rotor (13) with its apex points downwards.

16. Support according to any of the preceding claims, characterised in that the spice containers (2) are in each case suspended by a hook (5) from the holding ledge (17).

17. Support according to any of the preceding claims, characterised in that the rotor (13) is provided with a handle (21) which is anchored in the rotor.

18. Support according to any of the preceding claims, characterised in that the handle (21) is designed as a profile, e.g. round bar, and has a hooked end which together with the circular disc (14) forms means to prevent pulling off.

19. Support according to any of the preceding claims, characterised in that the handle is U-shaped in side view and mainly anchored by both its ends in vertical bores (22) of the rotor (13).

20. Support according to any of the preceding claims, characterised in that at least one end of the handle (21) is designed as a hook (23) open on one side, which when the handle is assembled in the rotor is open with its opening towards the rotor axis for receiving the circular disc (14), wherein the hook with its hook projection at least partially engages under the circular disc.

21. Support according to claim 1, characterised in that the rotor (13) is a point-symmetrical or rotationally symmetrical body.

## Revendications

1. Support avec pots d'épices comportant un montant à symétrie de révolution (6) qui comprend une semelle (7) et, à son extrémité supérieure, un pivot (12) pour un rotor (13) présentant un talon support (17), les pots d'épices (2) étant accrochés à ce talon support (17) et le montant (6) présentant un corps d'appui (8) au sommet (10) duquel est prévu le pivot (12), caractérisé par le fait que la paroi du corps d'appui (8) forme un guidage du rotor (13).

2. Support selon la revendication 1, caractérisé par le fait que le pivot (12) est formé d'une tige axée sur l'axe (9) du montant (6).

3. Support selon l'une des revendications précédentes, caractérisé par le fait que le rotor présente une paroi enveloppe (20) qui entoure au moins partiellement le corps (8) du montant (6).

4. Support selon l'une des revendications précédentes, caractérisé par le fait que la paroi enveloppe (20) du rotor (13) est guidée par la paroi du corps d'appui (8).

5. Support selon l'une des revendications précédentes, caractérisé par le fait que le corps d'appui (8) est un cylindre qui se rétrécit coniquement à son extrémité supérieure.

6. Support selon l'une des revendications précédentes, caractérisé par le fait que sur le montant (6) existe un disque horizontal (14) axé sur l'axe (9) du cylindre.

7. Support selon l'une des revendications précédentes, caractérisé par le fait que le disque (14) est divisé en segments par des entailles radiales (15).

8. Support selon l'une des revendications 6 et 7, caractérisé par le fait que le disque est prévu à l'extrémité inférieure de la tige.

9. Support selon l'une des revendications 6 à 8, caractérisé par le fait que le disque est au moins partiellement saisi par derrière par une extrémité en forme de crochet jointe au rotor (13) et empêche le retrait du rotor (13) du montant (6).

10. Support selon l'une des revendications précédentes, caractérisé par le fait que le diamètre de la semelle (7) correspond au moins à la somme du diamètre du corps d'appui (8) et du double du diamètre des pots d'épices (2) accrochés dans le support.

11. Support selon l'une des revendications précédentes, caractérisé par le fait que le rotor (13) est constitué d'un plateau tournant qui a sur le dessous un logement (19) pour le pivot (12).

12. Support selon l'une des revendications précédentes, caractérisé par le fait que le plateau tournant, vu de dessus, est circulaire ou polygonal, par exemple octogonal.

13. Support selon l'une des revendications précédentes, caractérisé par le fait que le bord (16) du plateau tournant forme un talon support (17).

14. Support selon l'une des revendications précédentes, caractérisé par le fait que le rotor (13) est formé d'un cône (18) au sommet duquel se trouve le logement de pivot (19).

15. Support selon l'une des revendications précédentes, caractérisé par le fait que le cône du rotor (13) monté a son sommet dirigé vers le bas.

16. Support selon l'une des revendications précédentes, caractérisé par le fait que les pots d'épices (2) sont accrochés chacun au talon support (17) par un crochet (5).

17. Support selon l'une des revendications précédentes, caractérisé par le fait que le rotor (13) est pourvu d'une poignée (12) qui y est ancrée.

18. Support selon l'une des revendications précédentes, caractérisé par le fait que la poignée (21) est constituée d'un profilé, par exemple d'une barre ronde, et a une extrémité en forme de crochet qui forme avec le disque (14) un dispositif anti-retrait.

19. Support selon l'une des revendications précédentes, caractérisé par le fait que la poignée est, vue de côté, en forme de U, et est ancrée principalement à ses deux extrémités dans des trous verticaux (22) du rotor (13).

20. Support selon l'une des revendications précédentes, caractérisé par le fait qu'au moins une extrémité de la poignée (21) forme un crochet ouvert d'un côté (23) qui, lorsque la poignée est montée dans le rotor, a son ouverture dirigée vers l'axe du rotor pour recevoir le disque (14), le nez du crochet étant appliqué au moins partiellement sous le disque.

21. Support selon la revendication 1, caractérisé par le fait que le rotor (13) est un corps à symétrie par rapport à un point ou de révolution.
